# EUROPÄISCHE PATENTANMELDUNG

(11) **EP 1 001 178 A2**
(43) Veröffentlichungstag der Anmeldung: **17.05.2000**
(21) Anmeldenummer: 99121368.7
(22) Anmeldetag: 27.10.1999
(51) Int. Cl.: F16B 25/00

(54) **Gasbeton-Schraube**

(30) Priorität: 13.11.1998 DE 19852339
(71) Anmelder: TOGE-Dübel A. Gerhard KG, 90431 Nürnberg (DE)
(72) Erfinder: Gerhard, Anton, 90427 Nürnberg (DE)
(74) Vertreter: Rau, Albrecht

(57) **Zusammenfassung**

Gasbeton-Schraube (1) mit einem Kern (2) mit im wesentlichen kreisförmigem Querschnitt, einer Mittel-Längs-Achse (3), einer Einschraub-Längsrichtung (7) und einem Einführ-Ende (4) und mit einem einteilig mit dem Kern (2) ausgebildeten Gewinde (6), wobei der Durchmesser des Kerns (2) vom Einführ-Ende (4) her zumindest entlang eines wesentlichen Teils des Gewindes (6) stetig zunimmt.

## Beschreibung

Die Erfindung betrifft eine Gasbeton-Schraube gemäß dem Oberbegriff des Anspruchs 1.

Aus der DE 296 11 864 U1 ist ein Holzschraube bekannt, die einen Kern konstanten Durchmessers aufweist, an dessen Einführ-Ende eine Spitze vorgesehen ist. Mit dem Kern ist ein Gewinde einteilig ausgebildet, das entlang eines Teils mit Schneiden versehen ist. Der Außendurchmesser des Gewindes ist im wesentlichen konstant. Werden die hieraus bekannten Schrauben in Gasbeton verwendet, so führt ihr Einschrauben dazu, daß das Wandmaterial rissig wird, wodurch der Halt der Schraube im Gasbeton beeinträchtigt wird. Ferner sind die erforderlichen Einschraubdrehmomente sehr groß.

Der Erfindung liegt die Aufgabe zugrunde, eine Gasbeton-Schraube bereitzustellen, die einfach in Gasbeton eingeschraubt werden kann und darin fest sitzt.

Die Aufgabe wird durch die Merkmale des Kennzeichnungsteils des Anspruchs 1 gelöst. Der Kern der Erfindung besteht darin, einen Schraubenkern vorzusehen, dessen Durchmesser vom Einführ-Ende her kontinuierlich zunimmt.

Zusätzliche vorteilhafte Weiterbildungen der Erfindung ergeben sich aus den Unteransprüchen.

Weitere Vorteile und Einzelheiten ergeben sich aus der nachfolgenden Beschreibung anhand der Zeichnung. Es zeigen:

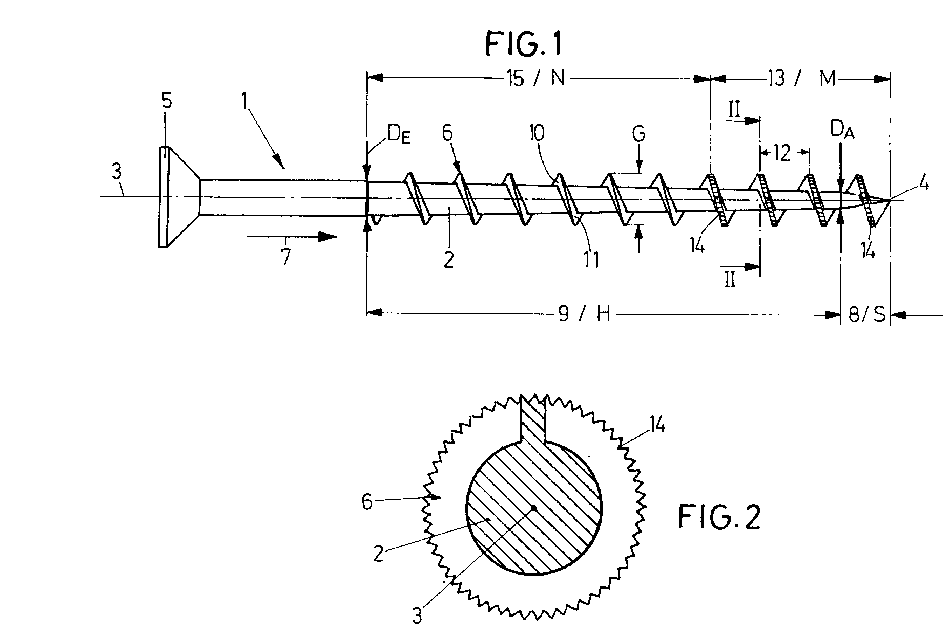

Fig. 1 eine Draufsicht auf eine erfindungsgemäße Schraube und
Fig. 2 eine Querschnittsdarstellung gemäß der Schnittlinie II-II in Fig. 1.

Eine Gasbeton-Schraube 1 weist einen Kern 2 mit im wesentlichen kreisförmigen Querschnitt und einer Mittel-Längs-Achse 3 auf. Die Schraube 1 besitzt ein Einführ-Ende 4 und an dem dem Einführ-Ende 4 abgewandten Ende des Kerns 2 einen beliebig auszubildenden Schraubenkopf 5. Auf dem Kern 2 ist ein Gewinde 6 ausgeformt, das einen keilförmigen, zum Außenumfang der Schraube 1 hin spitz zulaufenden Querschnitt aufweist.

Der Kern 2 ist vom Einführ-Ende 4 entgegen der Einschraub-Längsrichtung 7 der Schraube 1 in einen Spitzen-Kern-Abschnitt 8 und einen sich daran anschließenden Haupt-Kern-Abschnitt 9 unterteilt. Im Bereich des Abschnitts 8 läuft der Kern 2 zum Einführ-Ende 4 hin spitz zu. Die Länge entlang der Einschraub-Längsrichtung 7 des Abschnitts 8 wird mit S und die des Abschnitts 9 mit H bezeichnet. Der Durchmesser des Kerns 2 am Ende des Abschnitts 9 in Einschraub-Längsrichtung 7 wird mit D_{A} und der Durchmesser des Kerns 2 am vom Einführ-Ende 4 abgewandten Ende des Gewindes 6 wird mit D_{E} bezeichnet. Für das Verhältnis der Längen S und H gilt: 7 ≤ H/S ≤ 12 und insbesondere 9 ≤ H/S ≤ 10. Für das Verhältnis der Durchmesser D_{E} und D_{A} gilt: 1,1 ≤ D_{E}/D_{A} ≤ 2 und insbesondere 1,3 ≤ D_{E}/D_{A} ≤ 1,4. Der Durchmesser des Kerns 2 nimmt vom Einführ-Ende 4 her bis zum Ende des Gewindes 6 stetig zu. Entlang des Abschnitts 8 nimmt der Durchmesser des Kerns 2 vom Einführ-Ende 4 her stärker zu als entlang des Abschnitts 9, wobei für das Verhältnis ungefähr gilt: D_{A}/S ≅ 0,5. Entlang des Abschnitts 9 nimmt der Durchmesser des Kerns 2 entgegen der Einschraub-Längsrichtung 7 kontinuierlich zu, wobei ungefähr gilt: (D_{E} - D_{A}) / H ≅ 0,02.

Das Gewinde 6 weist Gewinde-Flanken 10, 11 auf, die miteinander einen spitzen Winkel einschließen. Der Durchmesser des Gewindes 6 nimmt vom Einführ-Ende 4 im Bereich des Abschnitts 8, der sich ungefähr über einen Gewindegang 12 erstreckt, kontinuierlich zu. Daran anschließend weist das Gewinde 6 entgegen der Einschraub-Längsrichtung 7 im wesentlichen einen konstanten Durchmesser G auf. Es ist auch möglich, ein sich gegenüber einem maximalen Durchmesser G des Gewindes 6 entgegen der Einschraub-Längsrichtung 7 verjüngendes Gewinde 6 vorzusehen, wobei die Verjüngung gegenüber G 85 % bis 99,9 % und insbesondere 98 bis 99,5 % beträgt. Für das Verhältnis des Durchmessers G zu den Durchmessern D_{E} und D_{A} gilt: 1,4 ≤ G/D_{E} ≤ 1,8 und 1,9 ≤ G/D_{A} ≤ 2,5, insbesondere G/D_{E} ≈ 1,6 und G/D_{A} ≈ 2,2.

Das Gewinde 6 weist vom Einführ-Ende 4 her einen Mikroschneid-Gewinde-Abschnitt 13 einer Länge M mit zum Außenumfang des Gewindes 6 in offen ausgebildeten Schneid-Kerben 14 auf. An den Mikroschneid-Gewinde-Abschnitt 13 schließt sich entgegen der Einschraub-Längsrichtung 7 ein Normal-Gewinde-Abschnitt 15 einer Länge N an. Die Schneid-Kerben 14 weisen im wesentlichen die Form eines sich zum Auβenumfang des Gewindes 6 erweiternden Dreiecks auf. Der genauere Aufbau der Schneid-Kerben 14 ist in der deutschen Patentanmeldung 198 01 105.9 vom 15.01.1998 desselben Anmelders beschrieben, worauf hiermit verwiesen wird. Für das Verhältnis der Längen N und M gilt: 0,5 ≤ N/M ≤ 5 und insbesondere 1 ≤ N/M ≤ 2. Der Normal-Gewinde-Abschnitt 15 ist als normales Gewinde mit glatten Außenumfang ausgebildet.

Beim Einschrauben der Gasbeton-Schraube 1 in Gasbeton wird die Spitze auf eine Gasbeton-Fläche aufgesetzt. Das Vorsehen ein Sacklochbohrung sowie von Dübeln ist nicht erforderlich. Beim Eindrehen der Schraube 1 schneiden die Schneid-Kerben 14 ein Innengewinde in den Gasbeton, wobei von Anfang an der Durchmesser G des Gewindes 6 vorliegt und sich nicht wie bei einer normalen Holzschraube kontinuierlich erweitert. Durch den sich kontinuierlich erweiternden Kern 2 wird das Wandmaterial kontinuierlich verdichtet, wodurch die Gasbeton-Schraube 1 einen besonders guten Sitz im Wandmaterial erhält, ohne daß dieses reißt. Die Auszugsfestigkeit der Schraube 1 ist deswegen substantiell gegenüber der herkömmlicher Schrauben erhöht. Sofern sich der Durchmesser des Gewindes 6 von einem maximalen Durchmesser G entgegen der Einschraub-Längsrichtung 7 geringfügig verjüngt, wird sichergestellt, daß die Schneid-Kerben 14 entlang des Mikroschneid-Gewinde-Abschnitts 13 ein geringfügig breiteres Innengewinde schneiden, in das der Teil des Gewindes 6 entlang des Normal-Gewinde-Abschnitts 15 mit geringerer Einschraubkraft eingedreht werden kann. Auf diese Weise kann die insgesamt erforderliche Einschraubkraft reduziert werden.

## Patentansprüche

1. Gasbeton-Schraube (1),
a) mit einem Kern (2) mit im wesentlichen kreisförmigem Querschnitt, einer Mittel-Längs-Achse (3), einer Einschraub- Längsrichtung (7) und einem Einführ-Ende (4) und
b) mit einem einteilig mit dem Kern (2) ausgebildeten Gewinde (6),
**dadurch gekennzeichnet, daß**
c) der Durchmesser des Kerns (2) vom Einführ-Ende (4) her zumindest entlang eines wesentlichen Teils des Gewindes (6) stetig zunimmt.

2. Gasbeton-Schraube (1) gemäß Anspruch 1, **dadurch gekennzeichnet, daß** der Kern (2) einen sich vom Einführ-Ende (4) weg erstreckenden Spitzen-Kern-Abschnitt (8) aufweist, entlang dem der Kern (2) zum Einführ-Ende (4) hin spitz zuläuft.

3. Gasbeton-Schraube (1) gemäß Anspruch 1 oder 2, **dadurch gekennzeichnet, daß** sich an den Spitzen-Kern-Abschnitt (8) ein Haupt-Kern-Abschnitt (9) anschließt, wobei der Kern (2) zwischen dem Haupt-Kern-Abschnitt (9) und dem Spitzen-Kern-Abschnitt (8) einen Durchmesser D_{A} und am vom Einführ-Ende (4) abgewandten Ende des Gewindes (6) einen Durchmesser D_{E} aufweist.

4. Gasbeton-Schraube (1) gemäß einem der vorangehenden Ansprüche, **dadurch gekennzeichnet, daß** der Durchmesser des Gewindes (6) im wesentlichen vom Einführ-Ende (4) an entgegen der Einschraub-Längsrichtung (7) konstant ist oder sich leicht verjüngt.

5. Gasbeton-Schraube (1) gemäß Anspruch 4, **dadurch gekennzeichnet, daß** der Durchmesser des Gewindes (6) vom Einführ-Ende (4) her über ungefähr einen Gewindegang (12) kontinuierlich zunimmt.

6. Gasbeton-Schraube (1) gemäß Anspruch 4, **dadurch gekennzeichnet, daß** der Durchmesser des Gewindes (6) vom Einführ-Ende (4) her im Bereich des Spitzen-Kern-Abschnitts (8) kontinuierlich zunimmt.

7. Gasbeton-Schraube (1) gemäß einem der Ansprüche 4 bis 6, **dadurch gekennzeichnet, daß** der Durchmesser des Gewindes (6) entlang des Haupt-Kern-Abschnitts (9) im wesentlichen konstant ist oder sich leicht verjüngt.

8. Gasbeton-Schraube (1) gemäß einem der Ansprüche 4 bis 7, **dadurch gekennzeichnet, daß** das Gewinde (6) Gewinde-Flanken (10, 11) aufweist, die im Querschnitt ein im wesentlichen keilförmiges, zum Außenumfang des Gewindes (6) hin spitz zulaufendes Profil besitzen.

9. Gasbeton-Schraube (1) gemäß einem der vorangehenden Ansprüche, **dadurch gekennzeichnet, daß** das Gewinde (6) vom Einführ-Ende (4) her einen Mikroschneid-Gewinde-Abschnitt (13) einer Länge M mit zum Auβenumfang des Gewindes (6) hin offen ausgebildeten Schneid-Kerben (14) aufweist.

10. Gasbeton-Schraube (1) gemäß Anspruch 9, **dadurch gekennzeichnet, daß** die Schneid-Kerben (14) im Querschnitt im wesentlichen die Form eines Dreiecks aufweisen.
